# EUROPEAN PATENT SPECIFICATION

(11) **EP 3 325 532 B1**
(45) Date of publication and mention of the grant of the patent: **04.09.2024**
(21) Application number: 16745302.6
(22) Date of filing: 15.07.2016
(51) Int. Cl.: C08G 18/75, C08G 18/66, C08K 3/16, C08G 18/32, C08K 3/38, C01B 35/06, C08K 3/28, C08K 5/19

(54) **COMPOSITION FOR PREPARING MOLDED POLYMERIC ARTICLE**
VERFAHREN ZUR HERSTELLUNG EINES GEGOSSENEN POLYMERARTIKELS
COMPOSITION POUR LA PRÉPARATION D'UN ARTICLE POLYMÈRE MOULÉ

(30) Priority: 17.07.2015 US 201562193797 P; 14.07.2016 US 201615210269
(43) Date of publication of application: 30.05.2018
(73) Proprietor: PPG Industries Ohio, Inc., Cleveland, OH 44111 (US)
(72) Inventor: KRYGER, Matthew J., Hudson, WI 54016 (US); ZAWACKY, Steven R., Cranberry Township, PA 16066 (US); HICKENBOTH, Charles R., Cranberry Township, PA 16066 (US)
(74) Representative: f & e patent
(86) International application number: PCT/US2016/042524
(87) International publication number: WO 2017/015122

(56) References cited:
- EP-A1- 1 988 109
- EP-A1- 2 497 566
- JP-A- 2003 212 968
- US-A- 3 644 275

## Description

### FIELD OF THE INVENTION

The present invention provides a composition for producing a molded polymeric article which comprises a fluoride-containing mold release agent. The composition is particularly useful for production of optical articles using re-usable glass molds.

### BACKGROUND OF THE INVENTION

The use of various thermosetting organic polymeric compositions are known in the art for use in the production of molded polymeric articles. When such molded polymeric articles include polymeric optical articles, the compositions must provide optical articles having acceptable optical qualities while maintaining durability and impact resistance. Examples of such molded polymeric optical articles can include windshields, sunglasses, fashion lenses, non-prescription and prescription lenses, sport masks, face shields, and goggles.

A number of organic polymeric materials, such as plastics, have been developed as alternatives and replacements for glass in applications, such as optical lenses, fiber optics, windows and automotive, nautical and aviation transparencies. These polymeric materials can provide advantages relative to glass, including shatter resistance, lighter weight for a given application, ease of molding and demolding, and ease of dyeing or imparting a color or tint. However, the refractive indices of many polymeric materials are lower than that of glass. In ophthalmic applications, the use of a polymeric material having a lower refractive index will require a thicker lens, which is generally undesirable, relative to a material having a higher refractive index.

Generally, the aforementioned polymeric articles are prepared by casting the polymeric composition in glass molds. It has been found that many of the recently developed polymeric compositions used for this purpose can have an undesirable adhesion to the interior of the glass molds during the casting process. This leads to surface defects of the final polymeric article, as well as an increase in time to prepare and condition the molds with external mold release agents.

Thus, there is a need in the art to develop a polymeric composition having an adequate refractive index, good impact resistance/strength for practical use in optical articles, and ease of demolding from glass molds such that the final article is of acceptable optical quality.

EP 1 988 109 A1 to a catalyst for polythiourethanization reaction. US 3,644,275 relates to methods of reducing the photochemical degradation of polymeric materials. JP 2003 212968 A is directed to curable resin compositions.

### SUMMARY OF THE INVENTION

The present invention is directed to an organic polymerizable composition for producing a molded polymeric article. The composition comprises a mold release agent comprised of ionic fluoride and/or ionic fluoride precursor which is present in an amount sufficient to effect at least partial demolding of the polymeric article from a mold, wherein the ionic fluoride is present in an amount ranging from 20 to 5000 ppm; wherein the mold release agent is selected from the group consisting of ammonium fluoride, potassium fluoride, cesium fluoride, tin (II) fluoride, sodium tetrafluoroborate, tetrabutyl ammonium fluoride (trihydrate), and mixtures thereof; and wherein the composition further comprises a mold release agent which does not comprise ionic fluoride. Molded polymeric articles are also provided.

### DETAILED DESCRIPTION OF THE INVENTION

It is noted that, as used in this specification and the appended claims, the singular forms "a", "an", and "the" include plural referents, unless expressly and unequivocally limited to one referent.

For the purposes of this specification, unless otherwise indicated, all numbers expressing quantities of ingredients, reaction conditions, and other parameters used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

All numerical ranges herein include all numerical values and ranges of all numerical values within the recited numerical ranges. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

The various embodiments and examples of the present invention as presented herein are each understood to be non-limiting with respect to the scope of the invention.

As used herein, a "monovalent hydrocarbon group" means a monovalent group having a backbone repeat unit based exclusively on carbon. As used herein, "monovalent" refers to a substituent group that, as a substituent group, forms only one single covalent bond. For example, a monovalent group on the at least one polysiloxane will form one single covalent bond to a silicon atom in the backbone of the at least one polysiloxane polymer. As used herein, "hydrocarbon groups" are intended to encompass both branched and unbranched hydrocarbon groups.

Thus, when referring to a "monovalent hydrocarbon group", the hydrocarbon group can be branched or unbranched, acyclic or cyclic, saturated or unsaturated, or aromatic, and can contain from 1 to 24 (or in the case of an aromatic group from 3 to 24) carbon atoms. Non-limiting examples of such hydrocarbon groups include alkyl, alkoxy, alkylene, oxyalkylene, aryl, alkaryl, alkylene aryl, alkenylene, and alkoxyaryl groups. Non-limiting examples of lower alkyl groups include, for example, methyl, ethyl, propyl, and butyl groups. As used herein, "lower alkyl" refers to alkyl groups having from 1 to 6 carbon atoms. One or more of the hydrogen atoms of the hydrocarbon group can be substituted with heteroatoms. As used herein, "heteroatoms" mean elements other than carbon, for example, oxygen, nitrogen, and halogen atoms.

As used herein, "alkylene" refers to an acyclic or cyclic, saturated hydrocarbon group having a carbon chain length of from C₂ to C₂₅. Non-limiting examples of suitable alkylene groups include, but are not limited to, those derived from propenyl, 1-butenyl, 1-pentenyl, 1-decenyl, and 1-heneicosenyl, such as, for example (CH₂)₃, (CH₂)₄, (CH₂)₅, (CH₂)₁₀, and (CH₂)₂₃, respectively, as well as isoprene and myrcene.

As used herein, "oxyalkylene" refers to an alkylene group containing at least one oxygen atom bonded to, and interposed between, two carbon atoms and having an alkylene carbon chain length of from C₂ to C₂₅. Non-limiting examples of suitable oxyalkylene groups include those derived from trimethylolpropane monoallyl ether, trimethylolpropane diallyl ether, pentaerythritol monoallyl ether, polyethoxylated allyl alcohol, and polypropoxylated allyl alcohol, such as -(CH₂)₃OCH₂C(CH₂OH)₂(CH₂CH₂-).

As used herein, "alkylene aryl" refers to an acyclic alkylene group substituted with at least one aryl group, for example, phenyl, and having an alkylene carbon chain length of C₂ to C₂₅. The aryl group can be further substituted, if desired. Non-limiting examples of suitable substituent groups for the aryl group include, but are not limited to, hydroxyl groups, benzyl groups, carboxylic acid groups, and aliphatic hydrocarbon groups. Non-limiting examples of suitable alkylene aryl groups include, but are not limited to, those derived from styrene and 3-isopropenyl-∝,∝-dimethylbenzyl isocyanate, such as -(CH₂)₂C₆H₄- and -CH₂CH(CH₃)C₆H₃(C(CH₃)₂(NCO).

As used herein, "alkenylene" refers to an acyclic or cyclic hydrocarbon group having one or more double bonds and having an alkenylene carbon chain length of C₂ to C₂₅.

As previously mentioned, the present invention is directed to an organic polymerizable composition for producing a molded polymeric article. The composition comprises a mold release agent comprised of ionic fluoride and/or ionic fluoride precursor which is present in an amount sufficient to effect at least partial demolding of the polymeric article from a mold.

The "ionic fluoride" generally is in the form of a fluoride-containing salt. Suitable, non-limiting examples of such fluoride-containing salts can include ammonium fluoride, potassium fluoride, cesium fluoride, tin (II) fluoride, sodium tetrafluoroborate, tetrabutyl ammonium fluoride (trihydrate), and mixtures thereof.

As used herein, "ionic fluoride precursor" means a material capable of forming ionic fluoride *in situ, i.e.,* (i) upon introduction into the composition or into at least one component of the composition and/or (ii) upon thermal or photochemical induced ionization. Suitable ionic fluoride precursor materials can include, but are not limited to, hexafluorosilicic acid and salts thereof, tris(dimethylamino) sulfonium difluorotrimethylsilicate, boron trifluoride complexes, e.g., 4-methoxysalicyaldehyde*BF₃, and mixtures of the foregoing. In general, suitable examples of ionic fluoride precursor materials can include those described in "Greene's Protective Groups in Organic Synthesis", Wiley Interscience 4th Ed., pages 165-220.

The organic polymerizable composition of the present invention comprises ionic fluoride and/or ionic fluoride precursor materials along with mold release agents which do not contain ionic fluoride or ionic fluoride precursor materials. The ionic fluoride and/or ionic fluoride precursor materials, along with mold release agents which do not contain ionic fluoride or ionic fluoride precursor materials, can be added (either separately or as an admixture) to the final organic polymerizable composition, or they may be added (either separately or as an admixture) into one or more composition component(s) prior to forming the final polymerizable composition, or they may be added (either separately or as an admixture) to one or more components as well as to the final composition.

In addition to the ionic fluoride and/or ionic fluoride precursor materials, the organic polymerizable composition of the present invention further comprises a mold release agent which does not comprise ionic fluoride or ionic fluoride precursor. Such mold release agents which do not comprise ionic fluoride or ionic fluoride precursor hereinafter are referred to as "co-mold release agent(s)". Suitable co-mold release agents include, but are not limited to, mono-alkyl phosphates, dialkyl phosphates, organic fatty acids, esters, amines, and mixtures thereof. Specific but non-limiting examples of mono-alkyl and dialkyl phosphates can include those described in EP 0 912 632 B1 at paragraphs [0024] to [0033]. Such co-mold release agents can include a mixture of monobutyl acid phosphate and dibutyl acid phosphate commercially available from Kodak and Johoko Chemical Companies, and long chain phosphate esters such as C₇ to C₁₈ alkyl phosphates commercially available from Stepan Company as ZELEC^{®} UN. Further examples of such co-mold release agents are those which are blends of organic fatty acids and esters or blends of organic fatty acids, esters and amines commercially available from AXEL Plastics Research Laboratories, Inc. under the product codes INT-1582, INT-1685, and INT-1681/OG.

The ionic fluoride and/or ionic fluoride precursor material are present in the organic polymerizable composition of the present invention in an amount sufficient to effect at least partial demolding of the polymeric article from a mold, such as a glass mold. That is, the hardened, cured or set molded polymeric article should delaminate sufficiently from the mold surface such that the mold can be reused in subsequent molding processes.

The ionic fluoride is present in the composition in an amount ranging from 20 to 5000 ppm, such as 50 to 500 ppm, or 50 to 250 ppm.

In addition to the aforementioned mold release agents (and co-mold release agents), the organic polymerizable composition of the present invention further comprises a polymeric organic material selected from thermosetting polymeric organic materials and thermoplastic polymeric organic materials. The organic polymerizable composition, for example, can comprise a polymeric organic material selected from the group consisting of poly(C₁-C₁₂ alkyl methacrylates), poly(oxyalkylene dimethacrylates), poly(alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), thermoplastic polycarbonates, polyesters, polyurethanes, polythiourethanes, polysulfithiourethanes, poly(urea-urethane), polyethylene terephthalate), polystyrene, poly(alpha methylstyrene), copoly(styrene-methyl methacrylate), copoly(styrene-acrylonitrile), polyvinyl butyral or polymers prepared from bis(allyl carbonate) monomers, polyfunctional acrylate monomers, polyfunctional methacrylate monomers, diethylene glycol dimethacrylate monomers, diisopropenyl benzene monomers, ethoxylated bisphenol A dimethacrylate monomers, ethylene glycol bismethacrylate monomers, polyethylene glycol) bismethacrylate monomers, ethoxylated phenol bis methacrylate monomers, alkoxylated polyhydric alcohol polyacrylate monomers, styrene monomers, urethane acrylate monomers, glycidyl acrylate monomers, glycidyl methacrylate monomers, diallylidene pentaerythritol monomers, and mixtures thereof. In a particular embodiment, the organic polymerizable composition of the present invention comprises a polymeric organic material selected from the group consisting of polyurethanes, polythiourethanes, and poly(urea-urethane).

In certain embodiments, the organic polymerizable composition of the present invention comprises, in addition to the mold release agent comprising ionic fluoride and/or ionic fluoride precursor (andany co-mold release agents):
(a) a polyisocyanate component comprising one or more polyisocyanates; and
(b) a component that is reactive with the polyisocyanate component (a) comprising:
   (i) optionally, at least one polyol having a number average molecular weight greater than 500;
   (ii) an active hydrogen-containing component comprising (1) at least one polyol and/or polythiol, and (2) at least one compound containing both amine and hydroxyl functional groups, wherein the compound (2) has a number average molecular weight less than 500; and
   (iii) optionally, a urethanation catalyst.

In a further embodiment, the organic polymerizable composition of the present invention comprises, in addition to the mold release agent comprising ionic fluoride and/or ionic fluoride precursor (andany co-mold release agents):
(a) a polyisocyanate component comprising one or more polyisocyanates; and
(b) a component that is reactive with the polyisocyanate component (a), the component (b) comprising:
   (i) optionally, at least one polyol having a number average molecular weight greater than 500;
   (ii) an active hydrogen-containing component comprising (1) at least one polyol and/or polythiol and, optionally, (2) at least one compound containing both amine and hydroxyl functional groups, wherein the compound (2) has a number average molecular weight less than 500;
   (iii) a urea-containing diol which is the reaction product of a reaction mixture substantially free of urethanation catalyst, the reaction mixture comprising a diisocyanate and at least one aliphatic compound containing both amine and hydroxyl functional groups, wherein the equivalent ratio of amine functional groups to isocyanate functional groups is at least 1; and
   (iv) optionally, a urethanation catalyst.

The polyisocyanate component can comprise one or more different polyisocyanates. Polyisocyanates useful in the composition are numerous and widely varied. Non-limiting examples can include aliphatic polyisocyanates, cycloaliphatic polyisocyanates wherein one or more of the isocyanato groups are attached directly to the cycloaliphatic ring, cycloaliphatic polyisocyanates wherein one or more of the isocyanato groups are not attached directly to the cycloaliphatic ring, aromatic polyisocyanates wherein one or more of the isocyanato groups are attached directly to the aromatic ring, and aromatic polyisocyanates wherein one or more of the isocyanato groups are not attached directly to the aromatic ring, and mixtures thereof. When an aromatic polyisocyanate is used, general care should be taken to select a material that does not cause the polyurethane-containing polymer to color (e.g., yellow).

The polyisocyanate can include, but is not limited to, aliphatic or cycloaliphatic diisocyanates, aromatic diisocyanates, cyclic dimers and cyclic trimers thereof, and mixtures thereof. Non-limiting examples of suitable polyisocyanates can include Desmodur N 3300 (hexamethylene diisocyanate trimer) which is commercially available from Bayer; Desmodur N 3400 (60% hexamethylene diisocyanate dimer and 40% hexamethylene diisocyanate trimer). In a non-limiting embodiment, the polyisocyanate can include dicyclohexylmethane diisocyanate and isomeric mixtures thereof. As used herein and the claims, the term "isomeric mixtures" refers to a mixture of the cis-cis, trans-trans, and/or cis-trans isomers of the polyisocyanate. Non-limiting examples of isomeric mixtures for use in the present invention can include the trans-trans isomer of 4,4'-methylenebis(cyclohexyl isocyanate), hereinafter referred to as "PICM" (paraisocyanato cyclohexylmethane), the cis-trans isomer of PICM, the cis-cis isomer of PICM, and mixtures thereof.

Suitable isomers for use in the present invention include, but are not limited to, the following three isomers of 4,4'-methylenebis(cyclohexyl isocyanate), also known as dicyclohexylmethane diisocyanate.

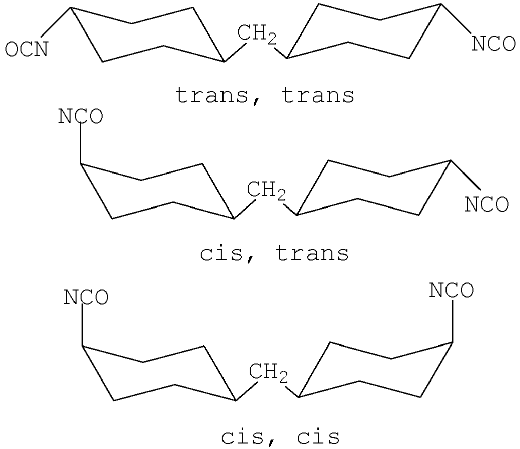

PICM can be prepared by phosgenating 4,4'-methylenebis(cyclohexyl amine) (PACM) by procedures well known in the art, such as the procedures disclosed in United States Patent Nos. 2,644,007; 2,680,127 and 2,908,703. The PACM isomer mixtures, upon phosgenation, can produce PICM in a liquid phase, a partial liquid phase, or a solid phase at room temperature. Alternatively, the PACM isomer mixtures can be obtained by the hydrogenation of methylenedianiline and/or by fractional crystallization of PACM isomer mixtures in the presence of water and alcohols, such as methanol and ethanol.

Additional aliphatic and cycloaliphatic diisocyanates that can be used include hexamethylene diisocyanate, dicyclohexylmethane diisocyanate, diphenylmethane-4,4'-diisocyanate, 3-isocyanato-methyl-3,5,5-trimethyl cyclohexylisocyanate ("IPDI") which is commercially available from Arco Chemical, m-xylylene diisocyanate ("MXDI"), and meta-tetramethylxylylene diisocyanate (1,3-bis(1-isocyanato-1-methylethyl)-benzene) which is commercially available from Cytec Industries Inc. under the trade name TMXDI^{®} (Meta) Aliphatic Isocyanate.

As used herein, the term "aliphatic and cycloaliphatic diisocyanates" refers to compounds having 6 to 100 carbon atoms linked in a straight chain or cyclized having two isocyanate reactive end groups. In a non-limiting embodiment of the present invention, the aliphatic and cycloaliphatic diisocyanates for use in the present invention can include IPDI and compounds of the formula R-(NCO)₂, wherein R represents an aliphatic group or a cycloaliphatic group.

In a particular embodiment of the present invention, the polyisocyanate component comprises isophorone diisocyanate, dicyclohexylmethane diisocyanate, hexamethylene diisocyanate, diphenylmethane-4,4'-diisocyanate, meta-tetramethylxylylene diisocyanate, 1,3-bis(1-isocyanato-1-methylethyl)benzene, and/or meta-xylylene diisocyanate.

The active hydrogen component (b)(ii) used to form the reaction mixture comprises at least one polyol and/or polythiol, and at least one compound containing both amine and hydroxyl functional groups (i.e., an amino alcohol). In certain embodiments the active hydrogen component (b)(ii) used to form the reaction mixture comprises at least two polyols and at least one amino alcohol.

In particular embodiments of the present invention, the reaction mixture is essentially free of compounds containing both amino and aromatic functional groups, wherein the amino groups are attached directly to the aromatic ring. The reaction mixture may also be essentially free of polyamines. Typically, the amino alcohol is aliphatic.

Suitable polyols can include, but are not limited to, polyether polyols, polyester polyols, polycaprolactone polyols, polycarbonate polyols, and mixtures thereof. Monomeric polyols such as butanediol, 1,6-hexanediol, Bisphenol A and the like, or other higher polyols such as trimethylolpropane, pentaerythritol, and the like, and any of the low molecular weight diols or glycols listed below are also suitable. At least one of the polyols in the active hydrogen component may contain aromatic functionality. It is believed that the use of aromatic polyols increases the refractive index (RI) of the optical article being prepared. However, it is preferred that, when at least one of the polyols is an aromatic ring-containing polyol, the hydroxyl groups in the polyol are not directly bonded to the aromatic ring; i.e., the aromatic polyols are not phenolic.

Examples of polyether polyols are polyalkylene ether polyols which include those having the following structural formula: 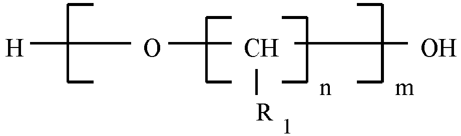 or 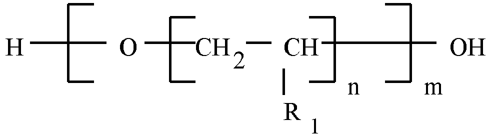 where the substituent R₁ is hydrogen or lower alkyl containing from 1 to 5 carbon atoms including mixed substituents, and n is typically from 2 to 6 and m is from 8 to 100 or higher. Included are poly(oxytetramethylene) glycols, poly(oxytetraethylene) glycols, poly(oxy-1,2-propylene) glycols, and poly(oxy-1,2-butylene) glycols. Non-limiting examples of alkylene oxides can include ethylene oxide, propylene oxide, butylene oxide, amylene oxide, aralkylene oxides, such as but not limited to styrene oxide, mixtures of ethylene oxide and propylene oxide. In a further non-limiting embodiment, polyoxyalkylene polyols can be prepared with mixtures of alkylene oxide using random or step-wise oxyalkylation.

Also useful are polyether polyols formed from oxyalkylation of various polyols, for example, diols such as ethylene glycol, 1,6-hexanediol, Bisphenol A and the like, or other higher polyols such as trimethylolpropane, pentaerythritol, and the like. Polyols of higher functionality which can be utilized as indicated can be made, for instance, by oxyalkylation of compounds such as sucrose or sorbitol. One commonly utilized oxyalkylation method is reaction of a polyol with an alkylene oxide, for example, propylene or ethylene oxide, in the presence of an acidic or basic catalyst. Particular polyethers include those sold under the names TERATHANE and TERACOL, available from E. I. Du Pont de Nemours and Company, Inc., and POLYMEG, available from Q O Chemicals, Inc., a subsidiary of Great Lakes Chemical Corp.

Polyether glycols for use in the present invention can include, but are not limited to, polytetramethylene ether glycol.

The polyether-containing polyol can comprise block copolymers including blocks of ethylene oxide-propylene oxide and/or ethylene oxide-butylene oxide. Pluronic R, Pluronic L62D, Tetronic R and Tetronic, which are commercially available from BASF, can be used as the polyether-containing polyol material in the present invention.

Suitable polyester glycols can include, but are not limited to, the esterification products of one or more dicarboxylic acids having from four to ten carbon atoms, such as adipic, succinic or sebacic acids, with one or more low molecular weight glycols or diols having from two to ten carbon atoms, such as ethylene glycol, propylene glycol, diethylene glycol, 1,4-butanediol, neopentyl glycol, 1,6-hexanediol and 1,10-decanediol. In a non-limiting embodiment, the polyester glycols can be the esterification products of adipic acid with diols of from two to ten carbon atoms.

Suitable polycaprolactone glycols for use in the present invention can include the reaction products of E-caprolactone with one or more of the low molecular weight glycols listed above. A polycaprolactone may be prepared by condensing caprolactone in the presence of a difunctional active hydrogen compound, such as water, or at least one of the low molecular weight glycols listed above. Particular examples of polycaprolactone glycols include polycaprolactone polyesterdiols available as CAPA^{®} 2047 and CAPA^{®} 2077 from Solvay Corp.

Polycarbonate polyols are known in the art and are commercially available, such as Ravecarb^{™} 107 (Enichem S.p.A.). In a non-limiting embodiment, the polycarbonate polyol can be produced by reacting an organic glycol such as a diol and a dialkyl carbonate, such as described in United States Patent No. 4,160,853. In a non-limiting embodiment, the polyol can include polyhexamethyl carbonate having varying degrees of polymerization.

The glycol material can comprise low molecular weight polyols, such as polyols having a molecular weight of less than 500, and compatible mixtures thereof. As used herein, the term "compatible" means that the glycols are mutually soluble in each other so as to form a single phase. Non-limiting examples of these polyols can include low molecular weight diols and triols. If used, the amount of triol is chosen so as to avoid a high degree of cross-linking in the polyurethane. A high degree of cross-linking can result in a curable polyurethane that is not formable by moderate heat and pressure. The organic glycol typically contains from 2 to 16, or from 2 to 6, or from 2 to 10 carbon atoms. Non-limiting examples of such glycols and other polyols can include ethylene glycol, propylene glycol, diethylene glycol, triethylene glycol, tetraethylene glycol, dipropylene glycol, tripropylene glycol, 1,2-, 1,3- and 1,4-butanediol, 2,2,4-trimethyl-1,3-pentanediol, 2-methyl-1,3-pentanediol, 1,3- 2,4- and 1,5-pentanediol, 2,5- and 1,6-hexanediol, 2,4-heptanediol, 2-ethyl-1,3-hexanediol, 2,2-dimethyl-1,3-propanediol, 1,8-octanediol, 1,9-nonanediol, 1,10-decanediol, 1,4-cyclohexanediol, 1,4-cyclohexanedimethanol, 1,2-bis(hydroxyethyl)-cyclohexane, glycerin, tetramethylolmethane, such as but not limited to pentaerythritol, trimethylolethane and trimethylolpropane; and isomers thereof.

The polyol can have a weight average molecular weight, for example, of at least 60, or at least 90, or at least 200. Additionally, the polyol can have a weight average molecular weight, for example, of less than 10,000, or less than 7000, or less than 5000, or less than 2000.

The polyol for use in the present invention can include teresters produced from at least one low molecular weight dicarboxylic acid, such as adipic acid.

Polyester glycols and polycaprolactone glycols for use in the present invention can be prepared using known esterification or transesterification procedures as described, for example, in the article D. M. Young, F. Hostettler et al., "Polyesters from Lactone", Union Carbide F-40, p. 147.

Polyester glycols can also be prepared from the reaction of 1,6-hexanediol and adipic acid; 1,10-decanediol and adipic acid; or 1,10-decanediol and caprolactone.

Thiol-containing materials may be present in the active hydrogen component and may be used to produce a prepolymer such as a sulfur-containing isocyanate-functional polyurethane for the preparation of high index polyurethane-containing films; i.e., films having a relatively high refractive index. Note that, in these embodiments, the polyurethane prepolymer used as the first component may contain disulfide linkages due to disulfide linkages contained in the polythiol and/or polythiol oligomer used to prepare the polyurethane prepolymer.

Thiol-containing materials may have at least two thiol functional groups and may comprise a dithiol, or a mixture of a dithiol and a compound having more than two thiol functional groups (higher polythiol). Such mixtures may include mixtures of dithiols and/or mixtures of higher polythiols. The thiol functional groups are typically terminal groups, though a minor portion (i.e., less than 50 percent of all groups) may be pendant along a chain. The compound (a) may additionally contain a minor portion of other active hydrogen functionality (i.e., different from thiol), for example, hydroxyl functionality. Thiol-containing materials may be linear or branched, and may contain cyclic, alkyl, aryl, aralkyl, or alkaryl groups.

Thiol-containing materials may be selected so as to produce a substantially linear oligomeric polythiol. Therefore, the material comprises a mixture of a dithiol and a compound having more than two thiol functional groups, the compound having more than two thiol functional groups can be present in an amount up to 10 percent by weight of the mixture.

Suitable dithiols can include linear or branched aliphatic, cycloaliphatic, aromatic, heterocyclic, polymeric, oligomeric dithiols, and mixtures thereof. The dithiol can comprise a variety of linkages including, but not limited to, ether linkages (-O-), sulfide linkages (-S-), polysulfide linkages (-Sx-, wherein x is at least 2, or from 2 to 4), and combinations of such linkages.

Non-limiting examples of suitable dithiols for use in the present invention can include, but are not limited to, 2,5-dimercaptomethyl-1,4-dithiane, dimercaptodiethylsulfide (DMDS), ethanedithiol, 3,6-dioxa-1,8-octanedithiol, ethylene glycol di(2-mercaptoacetate), ethylene glycol di(3-mercaptopropionate), poly(ethylene glycol) di(2-mercaptoacetate) and polyethylene glycol) di(3-mercaptopropionate), benzenedithiol, 4-tert-butyl-1,2-benzenedithiol, 4,4'-thiodibenzenethiol, and mixtures thereof.

The dithiol may include dithiol oligomers having disulfide linkages, such as materials represented by the following formula: 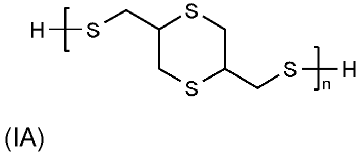 wherein n can represent an integer from 1 to 21.

Dithiol oligomers represented by Formula IA can be prepared, for example, by the reaction of 2,5-dimeracaptomethyl-1 ,4-dithiane with sulfur in the presence of basic catalyst, as known in the art.

The nature of the SH group in polythiols is such that oxidative coupling can occur readily, leading to formation of disulfide linkages. Various oxidizing agents can lead to such oxidative coupling. The oxygen in the air can, in some cases, lead to such oxidative coupling during storage of the polythiol. It is believed that a possible mechanism for the oxidative coupling of thiol groups involves the formation of thiyl radicals, followed by coupling of said thiyl radicals, to form disulfide linkage. It is further believed that formation of disulfide linkage can occur under conditions that can lead to the formation of thiyl radical, including but not limited to reaction conditions involving free radical initiation. The polythiols can include species containing disulfide linkages formed during storage.

The polythiols for use in the preparation of the polyurethane material in the first component can also include species containing disulfide linkages formed during synthesis of the polythiol.

In certain embodiments, the dithiol for use in the present invention, can include at least one dithiol represented by the following structural formulas:

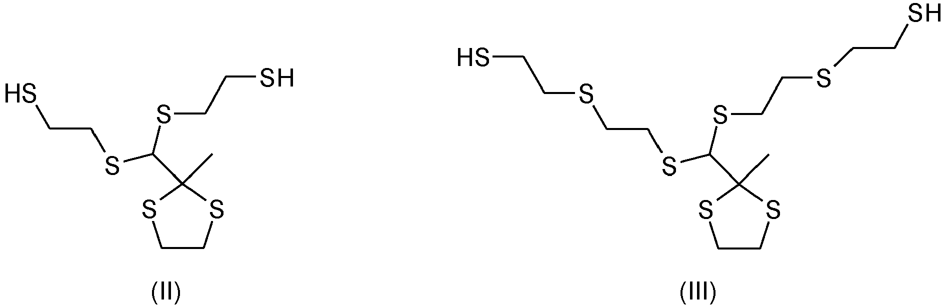

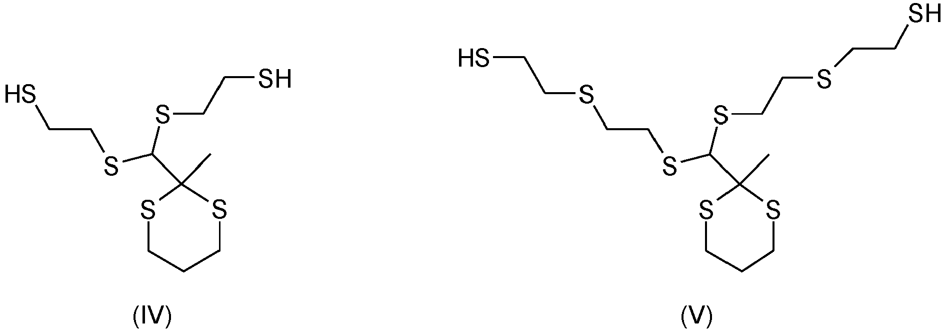

The sulfide-containing dithiols comprising 1,3-dithiolane (e.g., formulas II and III) or 1,3-dithiane (e.g., formulas IV and V) can be prepared by reacting asym-dichloroacetone with dimercaptan, and then reacting the reaction product with dimercaptoalkylsulfide, dimercaptan or mixtures thereof, as described in U. S. Patent No. 7,009,032 B2.

Non-limiting examples of suitable dimercaptans for use in the reaction with asym-dichloroacetone can include, but are not limited to, materials represented by the following formula: 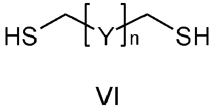 wherein Y can represent CH₂ or (CH₂-S-CH₂), and n can be an integer from 0 to 5. The dimercaptan for reaction with asym-dichloroacetone in the present invention can be chosen from, for example, ethanedithiol, propanedithiol, and mixtures thereof.

The amount of asym-dichloroacetone and dimercaptan suitable for carrying out the above reaction can vary. For example, asym-dichloroacetone and dimercaptan can be present in the reaction mixture in an amount such that the molar ratio of dichloroacetone to dimercaptan can be from 1:1 to 1:10.

Suitable temperatures for reacting asym-dichloroacetone with dimercaptan can vary, often ranging from 0 to 100°C.

Non-limiting examples of suitable dimercaptans for use in the reaction with the reaction product of the asym-dichloroacetone and dimercaptan can include, but are not limited to, materials represented by the above general formula VI, aromatic dimercaptans, cycloalkyl dimercaptans, heterocyclic dimercaptans, branched dimercaptans, and mixtures thereof.

Non-limiting examples of suitable dimercaptoalkylsulfides for use in the reaction with the reaction product of the asym-dichloroacetone and dimercaptan can include materials represented by the following formula: 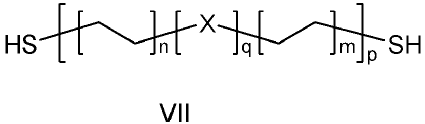 wherein X can represent O, S or Se, n can be an integer from 0 to 10, m can be an integer from 0 to 10, p can be an integer from 1 to 10, q can be an integer from 0 to 3, and with the proviso that (m + n) is an integer from 1 to 20.

Non-limiting examples of suitable dimercaptoalkylsulfides for use in the present invention can include branched dimercaptoalkylsulfides.

The amount of dimercaptan, dimercaptoalkylsulfide, or mixtures thereof suitable for reacting with the reaction product of asym-dichloroacetone and dimercaptan can vary. Typically, dimercaptan, dimercaptoalkylsulfide, or a mixture thereof can be present in the reaction mixture in an amount such that the equivalent ratio of reaction product to dimercaptan, dimercaptoalkylsulfide, or a mixture thereof can be from 1:1.01 to 1:2. Moreover, suitable temperatures for carrying out this reaction can vary within the range of from 0 to 100°C.

The reaction of asym-dichloroacetone with dimercaptan can be carried out in the presence of an acid catalyst. The acid catalyst can be selected from a wide variety known in the art, such as but not limited to Lewis acids and Bronsted acids. Non-limiting examples of suitable acid catalysts can include those described in Ullmann's Encyclopedia of Industrial Chemistry, 5th Edition, 1992, Volume A21, pp. 673 to 674. The acid catalyst is often chosen from boron trifluoride etherate, hydrogen chloride, toluenesulfonic acid, and mixtures thereof. The amount of acid catalyst can vary from 0.01 to 10 percent by weight of the reaction mixture.

The reaction product of asym-dichloroacetone and dimercaptan can alternatively be reacted with dimercaptoalkylsulfide, dimercaptan, or mixtures thereof in the presence of a base. The base can be selected from a wide variety known in the art, such as but not limited to Lewis bases and Bronsted bases. Non-limiting examples of suitable bases can include those described in Ullmann's Encyclopedia of Industrial Chemistry, 5th Edition, 1992, Volume A21, pp. 673 to 674. The base is often sodium hydroxide. The amount of base can vary. Typically, a suitable equivalent ratio of base to reaction product of the first reaction can be from 1:1 to 10:1.

The reaction of asym-dichloroacetone with dimercaptan can be carried out in the presence of a solvent. The solvent can be selected from, but is not limited to, organic solvents. Non-limiting examples of suitable solvents can include, but are not limited to, chloroform, dichloromethane, 1,2-dichloroethane, diethyl ether, benzene, toluene, acetic acid, and mixtures thereof.

In another embodiment, the reaction product of asym-dichloroacetone and dimercaptan can be reacted with dimercaptoalkylsulfide, dimercaptan, or mixtures thereof, with or without the presence of a solvent, wherein the solvent can be selected from but is not limited to organic solvents. Non-limiting examples of suitable organic solvents can include alcohols, such as but not limited to methanol, ethanol and propanol; aromatic hydrocarbon solvents such as but not limited to benzene, toluene, xylene; ketones such as but not limited to methyl ethyl ketone; water; and mixtures thereof.

The reaction of asym-dichloroacetone with dimercaptan can also be carried out in the presence of a dehydrating reagent. The dehydrating reagent can be selected from a wide variety known in the art. Suitable dehydrating reagents for use in this reaction can include but are not limited to magnesium sulfate. The amount of dehydrating reagent can vary widely according to the stoichiometry of the dehydrating reaction.

The polythiols for use in the preparation of the polyurethane material in the first component can be prepared in certain non-limiting embodiments by reacting 2-methyl-2-dichloromethyl-1,3-dithiolane with dimercaptodiethylsulfide to produce dimercapto-1,3-dithiolane derivative of formula III. Alternatively, 2-methyl-2-dichloromethyl-1,3-dithiolane can be reacted with 1,2-ethanedithiol to produce dimercapto-1,3-dithiolane derivative of formula II. 2-methyl-2-dichloromethyl-1,3-dithiane can be reacted with dimercaptodiethylsulfide to produce dimercapto-1,3-dithiane derivative of formula V. Also, 2-methyl-2-dichloromethyl-1,3-dithiane can be reacted with 1,2-ethanedithiol to produce dimercapto-1,3-dithiane derivative of formula IV.

Another non-limiting example of a dithiol suitable for use as the material (ii) can include at least one dithiol oligomer prepared by reacting dichloro derivative with dimercaptoalkylsulfide as follows: 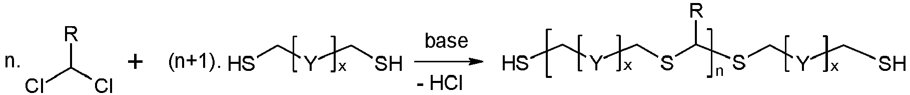 wherein R can represent CH₃, CHsCO, C₁ to C₁₀ alkyl, cycloalkyl, aryl alkyl, or alkyl-CO; Y can represent C₁ to C₁₀ alkyl, cycloalkyl, C₆ to C₁₄ aryl, (CH₂)ₚ(S)ₘ(CH₂)_{q}, (CH₂)ₚ(Se)ₘ(CH₂)_{q}, (CH₂)ₚ(Te)ₘ(CH₂)_{q}, wherein m can be an integer from 1 to 5; and p and q can each be an integer from 1 to 10; n can be an integer from 1 to 20; and x can be an integer from 0 to 10.

The reaction of dichloro derivative with dimercaptoalkylsulfide can be carried out in the presence of a base. Suitable bases include any known to those skilled in the art in addition to those disclosed above.

The reaction of dichloro derivative with dimercaptoalkylsulfide may be carried out in the presence of a phase transfer catalyst. Suitable phase transfer catalysts for use in the present invention are known and varied. Non-limiting examples can include, but are not limited to, tetraalkylammonium salts and tetraalkylphosphonium salts. This reaction is often carried out in the presence of tetrabutylphosphonium bromide as phase transfer catalyst. The amount of phase transfer catalyst can vary widely, from 0 to 50 equivalent percent, or from 0 to 10 equivalent percent, or from 0 to 5 equivalent percent, relative to the dimercaptosulfide reactants.

The polythiols may further contain hydroxyl functionality. Non-limiting examples of suitable materials having both hydroxyl and multiple (more than one) thiol groups can include, but are not limited to, glycerin bis(2-mercaptoacetate), glycerin bis(3-mercaptopropionate), 1,3-dimercapto-2-propanol, 2,3-dimercapto-1-propanol, trimethylolpropane bis(2-mercaptoacetate), trimethylolpropane bis(3-mercaptopropionate), pentaerythritol bis(2-mercaptoacetate), pentaerythritol tris(2-mercaptoacetate), pentaerythritol bis(3-mercaptopropionate), pentaerythritol tris(3-mercaptopropionate), and mixtures thereof.

In addition to dithiols disclosed above, particular examples of suitable dithiols can include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide (DMDS), methyl-substituted dimercaptodiethylsulfide, dimethyl-substituted dimercaptodiethylsulfide, 3,6-dioxa-1,8-octanedithiol, 1,5-dimercapto-3-oxapentane, 2,5-dimercaptomethyl-1,4-dithiane (DMMD),ethylene glycol di(2-mercaptoacetate), ethylene glycol di(3-mercaptopropionate), and mixtures thereof.

Suitable trifunctional or higher-functional polythiols for use in material (ii) can be selected from a wide variety known in the art. Non-limiting examples can include pentaerythritol tetrakis(2-mercaptoacetate), pentaerythritol tetrakis(3-mercaptopropionate), trimethylolpropane tris(2-mercaptoacetate), trimethylolpropane tris(3-mercaptopropionate), and/or thioglycerol bis(2-mercaptoacetate).

For example, the polythiol can be chosen from materials represented by the following general formula, 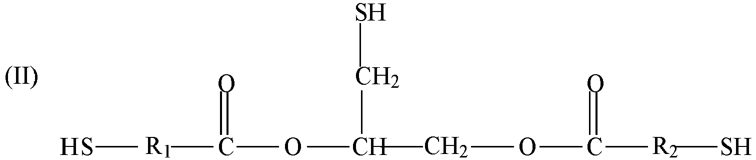 wherein R₁ and R₂ can each be independently chosen from straight or branched chain alkylene, cyclic alkylene, phenylene, and C₁-C₉ alkyl substituted phenylene. Non-limiting examples of straight or branched chain alkylene can include methylene, ethylene, 1,3-propylene, 1,2-propylene, 1,4-butylene, 1,2-butylene, pentylene, hexylene, heptylene, octylene, nonylene, decylene, undecylene, octadecylene, and icosylene. Non-limiting examples of cyclic alkylenes can include cyclopentylene, cyclohexylene, cycloheptylene, cyclooctylene, and alkyl-substituted derivatives thereof. The divalent linking groups R₁ and R₂ can be chosen from methylene, ethylene, phenylene, and alkyl-substituted phenylene, such as methyl, ethyl, propyl, isopropyl, and nonyl substituted phenylene.

In particular embodiments, a polythiol may be prepared by reacting together (1) any of the dithiols mentioned above, and (2) a compound having at least two double bonds (for example, a diene) or a compound having a triple bond, such as propargyl alcohol.

The compound (2) having at least two double bonds can be chosen from non-cyclic dienes, including straight chain and/or branched aliphatic non-cyclic dienes, non-aromatic ring-containing dienes, including non-aromatic ring-containing dienes, wherein the double bonds can be contained within the ring or not contained within the ring or any combination thereof, and wherein the non-aromatic ring-containing dienes can contain non-aromatic monocyclic groups or non-aromatic polycyclic groups or combinations thereof; aromatic ring-containing dienes; or heterocyclic ring-containing dienes; or dienes containing any combination of such non-cyclic and/or cyclic groups. The dienes can optionally contain thioether, disulfide, polysulfide, sulfone, ester, thioester, carbonate, thiocarbonate, urethane, or thiourethane linkages, or halogen substituents, or combinations thereof; with the proviso that the dienes contain double bonds capable of undergoing reaction with SH groups of a polythiol, and forming covalent C-S bonds. Often, the compound (2) having at least two double bonds comprises a mixture of dienes that are different from one another.

The compound having at least two double bonds may comprise acyclic non-conjugated dienes, acyclic polyvinyl ethers, allyl-(meth)acrylates vinyl-(meth)acrylates, di(meth)acrylate esters of diols, di(meth)acrylate esters of dithiols, di(meth)acrylate esters of poly(alkyleneglycol) diols, monocyclic non-aromatic dienes, polycyclic non-aromatic dienes, aromatic ring-containing dienes, diallyl esters of aromatic ring dicarboxylic acids, divinyl esters of aromatic ring dicarboxylic acids, and/or mixtures thereof.

Non-limiting examples of acyclic non-conjugated dienes can include those represented by the following general formula: 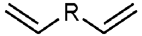 wherein R can represent C₁ to C₃₀ linear or branched divalent saturated alkylene radical, or C₂ to C₃₀ divalent organic radical including groups such as but not limited to those containing ether, thioether, ester, thioester, ketone, polysulfide, sulfone and combinations thereof. The acyclic non-conjugated dienes can be selected from 1,5-hexadiene, 1,6-heptadiene, 1,7-octadiene, and mixtures thereof.

Non-limiting examples of suitable acyclic polyvinyl ethers can include those represented by the following structural formula:

CH₂=CH--O--(--R²--O--)ₘ--CH=CH₂

wherein R₂ can be C₂ to C₆ n-alkylene, C₃ to C₆ branched alkylene group, or --[(CH₂--)ₚ --O--]_{q}--(--CH₂--)ᵣ--, m can be a rational number from 0 to 10, often 2, p can be an integer from 2 to 6, q can be an integer from 1 to 5, and r can be an integer from 2 to 10.

Non-limiting examples of suitable polyvinyl ether monomers for use can include divinyl ether monomers, such as ethylene glycol divinyl ether, diethylene glycol divinyl ether, triethylene glycol divinyl ether, and mixtures thereof.

Di(meth)acrylate esters of linear diols can include ethanediol di(meth)acrylate, 1,3-propanediol dimethacrylate, 1,2-propanediol di(meth)acrylate, 1,4-butanediol di(meth)acrylate, 1,3-butanediol di(meth)acrylate, 1,2-butanediol di(meth)acrylate, and mixtures thereof.

Di(meth)acrylate esters of dithiols can include, for example, di(meth)acrylate of 1,2-ethanedithiol including oligomers thereof, di(meth)acrylate of dimercaptodiethyl sulfide (i.e., 2,2'-thioethanedithiol di(meth)acrylate) including oligomers thereof, di(meth)acrylate of 3,6-dioxa-1,8-octanedithiol including oligomers thereof, di(meth)acrylate of 2-mercaptoethyl ether including oligomers thereof, di(meth)acrylate of 4,4'-thiodibenzenethiol, and mixtures thereof.

Further non-limiting examples of suitable dienes can include monocyclic aliphatic dienes such as those represented by the following structural formula: 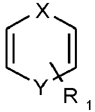 wherein X and Y each independently can represent C₁-C₁₀ divalent saturated alkylene radical or C₁-C₅ divalent saturated alkylene radical, containing at least one element selected from the group of sulfur, oxygen, and silicon in addition to the carbon and hydrogen atoms; and R₁ can represent H or C₁-C₁₀ alkyl; and 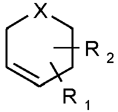 wherein X and R₁ can be as defined above and R₂ can represent C₂-C₁₀ alkenyl. The monocyclic aliphatic dienes can include 1,4-cyclohexadiene, 4-vinyl-1-cyclohexene, dipentene, and terpinene.

Non-limiting examples of polycyclic aliphatic dienes can include 5-vinyl-2-norbornene, 2,5-norbornadiene, dicyclopentadiene, and mixtures thereof.

Non-limiting examples of aromatic ring-containing dienes can include those represented by the following structural formula: 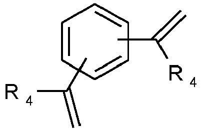 wherein R₄ can represent hydrogen or methyl. Aromatic ring-containing dienes can include monomers such as diisopropenyl benzene, divinyl benzene, and mixtures thereof.

Examples of diallyl esters of aromatic ring dicarboxylic acids can include, but are not limited to, those represented by the following structural formula: 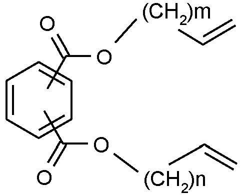 wherein m and n each independently can be an integer from 0 to 5. The diallyl esters of aromatic ring dicarboxylic acids can include o-diallyl phthalate, m-diallyl phthalate, p-diallyl phthalate, and mixtures thereof.

Often, the compound (2) having at least two double bonds comprises 5-vinyl-2-norbornene, ethylene glycol divinyl ether, diethylene glycol divinyl ether, triethylene glycol divinyl ether, butane diol divinyl ether, vinylcyclohexene, 4-vinyl-1-cyclohexene, dipentene, terpinene, dicyclopentadiene, cyclododecadiene, cyclooctadiene, 2-cyclopentene-1-yl-ether, 2,5-norbornadiene, divinylbenzene including 1,3-divinylbenzene, 1,2- divinylbenzene, and 1,4- divinylbenzene, diisopropenylbenzene including 1,3-diisopropenylbenzene, 1,2-diisopropenylbenzene, and 1,4-diisopropenylbenzene, allyl (meth)acrylate, ethanediol di(meth)acrylate, 1,3-propanediol di(meth)acrylate, 1,2-propanediol di(meth)acrylate, 1,3-butanediol di(meth)acrylate, 1,2-butanediol di(meth)acrylate, ethylene glycol di(meth)acrylate, diethylene glycol di(meth)acrylate, dimercaptodiethylsulfide di(meth)acrylate, 1,2-ethanedithiol di(meth)acrylate, and/or mixtures thereof.

Other non-limiting examples of suitable di(meth)acrylate monomers can include ethylene glycol di(meth)acrylate, 1,3-butylene glycol di(meth)acrylate, 1,4-butanediol di(meth)acrylate, 2,3-dimethyl-1,3-propanediol di(meth)acrylate, 1,6-hexanediol di(meth)acrylate, propylene glycol di(meth)acrylate, dipropylene glycol di(meth)acrylate, tripropylene glycol di(meth)acrylate, tetrapropylene glycol di(meth)acrylate, ethoxylated hexanediol di(meth)acrylate, propoxylated hexanediol di(meth)acrylate, neopentyl glycol di(meth)acrylate, alkoxylated neopentyl glycol di(meth)acrylate, hexylene glycol di(meth)acrylate, diethylene glycol di(meth)acrylate, polyethylene glycol di(meth)acrylate, thiodiethyleneglycol di(meth)acrylate, trimethylene glycol di(meth)acrylate, triethylene glycol di(meth)acrylate, alkoxylated hexanediol di(meth)acrylate, alkoxylated neopentyl glycol di(meth)acrylate, pentanediol di(meth)acrylate, cyclohexane dimethanol di(meth)acrylate, and ethoxylated bisphenol A di(meth)acrylate.

The polythiols suitable for use in material (ii) in the preparation of the polyurethane material in the first component, when reacted with a polyisocyanate (i), can produce a polymerizate having a Martens hardness of at least 20 N/mm2, or often at least 50, or more often between 70 and 200. Such polymerizates are typically not elastomeric; i.e., they are not substantially reversibly deformable (e.g., stretchable) due to their rigidity and do not typically exhibit properties characteristic of rubber and other elastomeric polymers.

The active hydrogen component also can further comprise at least one amino alcohol, i.e., a compound containing both amine and hydroxyl functional groups. The amino alcohol has the structure H₂N-L-OH, wherein L is a linear or branched alkyl, aryl, aralkyl, or alkaryl chain which may contain hetero atoms. In particular embodiments, the amino alcohol has the structure H₂N-CH₂-L'-CH₂-OH, wherein L' is a linear or branched alkyl, aryl, aralkyl, or alkaryl chain which may contain hetero atoms. Such materials more often have the structure: 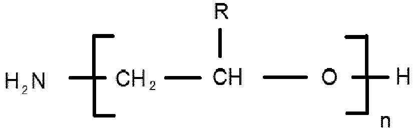 wherein R is H or a C₁ to C₄ alkyl group, and n is an integer from 1 to 10.

As noted above, the amino alcohol is often aliphatic. Aliphatic materials lend better flexibility to the final product, providing better impact resistance. Optical products prepared according to the method of the present invention, with aliphatic materials, also demonstrate better light stability and less yellowing compared to those prepared with aromatic materials. Aromatic starting materials, such as aromatic amines, are also known to have relatively short shelf lives and are subject to oxidation and yellowing.

It is somewhat counterintuitive to use aliphatic materials because aliphatic polyamines react too quickly with isocyanates to control the formation of a polyurea, resulting in very short gel times. However, the use of an aliphatic compound containing both amine and hydroxyl functional groups as in the present invention slows the reaction with the isocyanate compared to a reaction of an aliphatic polyamine with an isocyanate. At the same time, the use of an aliphatic compound containing both amine and hydroxyl functional groups provides for desirable physical properties in the final product, such as thermal stability and hardness, allowing for post-production lens processing. It is believed that this is due to the urea linkages present in the polymerizate. Urea linkages also render the final product non-elastomeric.

The compound containing both amine and hydroxyl functional groups typically has a number average molecular weight of 60 to 450. Materials having higher molecular weights may contribute to opaqueness. Often, the material containing both amine and hydroxyl functional groups comprises ethanolamine, diethanolamine, amino-2-propanol, 2-amino-1-methyl-1-propanol, 2-amino-1-butanol, and/or 2-(2-aminoethoxy)ethanol (diethyleneglycol amine, or DGA). Typically, the material containing both amine and hydroxyl functional groups is present in the active hydrogen component (b) in an amount of 5 to 70 percent by weight, often 10 to 70 percent by weight, more often 15 to 50 percent by weight, based on the total weight of resin solids in component (b). Typically, the material containing both amine and hydroxyl functional groups is present in the reaction mixture in an amount of 5 to 25 percent by weight, based on the total weight of resin solids in the reaction mixture.

Additionally, in certain embodiments of the present invention, the reaction mixture is essentially free of polyamines. In particular, the active hydrogen component is often essentially free of 2,4-diamino-3,5-diethyl-toluene, 2,6-diamino-3,5-diethyl-toluene, and mixtures thereof (collectively "diethyltoluenediamine" or "DETDA").

As previously mentioned, the organic polymerizable composition of the present invention optionally comprises urethanation catalyst. Non-limiting examples of suitable catalysts can be chosen from the group of Lewis bases, Lewis acids, and insertion catalysts as described in Ullmann's Encyclopedia of Industrial Chemistry, 5th Edition, 1992, Volume A21, pp. 673 to 674. The catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dibutyltin dichloride, and mixtures thereof. The catalyst can alternately be zinc octoate, bismuth, or ferric acetylacetonate.

Further non-limiting examples of suitable catalysts can include tin compounds such as dibutyl tin oxide, phosphines, tertiary ammonium salts, and tertiary amines, such as but not limited to triethylamine, triisopropylamine, dimethyl cyclohexylamine, 1,4-diazabicyclo[2.2.2]octane, N,N-dimethylbenzylamine, and mixtures thereof. Such suitable tertiary amines are disclosed in United States Patent No. 5,693,738 at column 10, lines 6-38.

When employed, the catalyst level can vary and can be dependent upon a variety of factors, such as the type and amounts of the reactive compounds used, as well as reaction conditions, speed of reaction, and degree of reaction desired. Typically, an organotin catalyst is present in component (b) in an amount less than 300 ppm, often less than 250 ppm, and a tertiary amine catalyst is present in an amount less than 1000 ppm, usually less than 800 ppm, often about 720 ppm, based on the total weight of (b).

It should further be mentioned that other commonly used solvents and/or additives can be included in the compositions of the present invention, if desired. Suitable solvents may include any organic solvents known to those skilled in the art, provided they are not reactive with isocyanate functional groups. Examples of solvents are ketones, furans, aromatic solvents, and chlorinated solvents. Suitable solvents can include but are not limited to acetone, amyl propionate, anisole, benzene, butyl acetate, cyclohexane, dialkyl ethers of ethylene glycol, e.g., diethylene glycol dimethyl ether and their derivatives (sold as CELLOSOLVE^{®} industrial solvents), diethylene glycol dibenzoate, dimethyl sulfoxide, dimethyl formamide, dimethoxybenzene, ethyl acetate, methyl cyclohexanone, cyclopentanone, methyl ethyl ketone, methyl isobutyl ketone, methyl propionate, propylene carbonate, tetrahydrofuran, toluene, xylene, 2-methoxyethyl ether, 3-propylene glycol methyl ether, methylene chloride, and mixtures thereof. Suitable additives can include but are not limited to light stabilizers, heat stabilizers, antioxidants, ultraviolet light absorbers, static (non-photochromic) dyes, pigments, and flexibilizing additives.

As mentioned previously, any of the above-described organic polymerizable compositions of the present invention are particularly useful in the production of molded polymeric articles, for example, windshields, sunglasses, fashion lenses, non-prescription and prescription lenses, sport masks, face shields, and goggles.

Any of the aforementioned organic polymerizable compositions of the present invention may be introduced into a mold of any desired shape at a temperature and for a time to form a polymerizate, such as a thermoset polymerizate. The reaction mixture can undergo an exothermic reaction and, after mixing, it is introduced, usually by injection, into a mold and, in the case of lenses, a glass mold. The temperature of the reaction mixture as it is introduced into the mold can be up to 130°C, often up to 120°C. The reaction mixture is held in the mold at a temperature and for a time sufficient to essentially cure the reaction mixture and form a molded optical article. The mold may have any shape desired for the final product. It is typically a lens mold; often a mold for an ophthalmic lens. The molded article may then be released from the mold. Alternatively, the reaction mixture, which can be optionally degassed, can be introduced, usually by injection, into a mold and the mold can be heated (i.e., using a thermal cure cycle) using a variety of conventional techniques known in the art. The thermal cure cycle can vary depending on the reactivity and molar ratio of the reactants, and the presence of catalyst(s). The thermal cure cycle can include heating the mixture from room temperature to a temperature of 200°C over a period of from 0.5 hours to 120 hours; or from 80 to 150°C for a period of from 5 hours to 72 hours.

Various embodiments disclosed herein will now be illustrated in the following non-limiting examples. Only the following examples, in which an organic polymerizable composition as defined in the claims have to be regarded as "according to the invention". The other compositions show alternatives not falling under the claimed invention.

### EXAMPLES

### Part I: Polymerizable Composition

Throughout the course of this set of experiments, the following two experimental formulations, as summarized in Table 1 below, were used during casting trials.

**Table 1. Polymerizable Composition for Formulations A and B**

| **Components** | **Formulation A (parts by weight)** | **Formulation B (parts by weight)** |
|---|---|---|
| Ethoxylated bisphenol A (6-EO) | 18.0 | 13.3 |
| Diethylene glycolamine | 18.0 | 7.9 |
| Ethoxylated trimethylolpropane (0.9-EO) | 2.9 | 2.9 |
| Cyclohexanedimethanol | - | 15.1 |
| DESMODUR^{®} W¹ | 61.1 | 60.8 |

| | | |
|---|---|---|
| ¹a cycloaliphatic diisocyanate available from Covestro AG. | | |

### Part II: Fluoride vs Chloride Comparison

Several comparative examples were made, which used alternative salts (in this case, chloride salts in place of the fluoride salts). In each example and comparative example, the first three components for Formulation A were combined in an Erlenmeyer flask according to the weight ratio designated in Table 1. They were then mixed using a magnetic stir plate and magnetic stir bar to achieve a homogeneous liquid at 25°C. To this mixture were added the fluoride or chloride salt, and ZELEC@ UN (a mold release agent available from Stepan Company) as indicated in Table 3. The combined mixture was degassed at room temperature under vacuum for 4 hours.

To cast the composition, components mixed above and DESMODUR^{®} W were mixed together under vacuum and heated until reaching a homogeneous appearance. The resulting mixture then was charged into the cavity of a mold comprised of two pieces of plate glass with dimensions 15 cm x 15 cm x 0.3 cm defined by a gasket there around. The contents of the glass mold then were cured in an oven using the following temperature scheme: 1) start at 70°C, and gradually heat to 130°C over a period of 1 hour; 2) hold the temperature at 130°C for 16 hours; 3) gradually decrease the temperature to 60°C over a period of 1 hour. After being cured under the aforementioned curing conditions, the samples were removed from the oven, and cooled. Then demolding was attempted as described below.

The gasket material was first removed from the edge of the molded article and the glass/polymer interface was scored with a putty knife to induce separation. A wedge also was used in some instances to separate the glass sheets from the cast polymer. Demoldability of the polymer was evaluated on a scale of 1 to 3 as shown in Table 2 below.

**Table 2. Demoldability Evaluation Scale for the Cast Polymer during Demolding**

| **Demoldability** | **Evaluation** |
|---|---|
| 1 | No release of the polymer from the glass |
| 2 | Partial release of the polymer, but with mold breakage or glass pull |
| 3 | Easy release of the polymer from the glass |

A summary of the comparison experiments can be found in Table 3 below.

**Table 3. Comparison Castings of Chloride and Fluoride Salts**

| **Examples** | **Halide Salts** | **Parts by Weight of the Salt** | **ZELEC^{®} UN (parts by weight)** | **Demoldability Evaluation** |
|---|---|---|---|---|
| **CE-1** | Potassium Chloride | 0.100 | 1 | 1 |
| **Ex-2** | Potassium Fluoride | 0.100 | 1 | 3 |
| **CE-3** | Ammonium Chloride | 0.100 | 1 | 1 |
| **Ex-4** | Ammonium Fluoride | 0.100 | 1 | 3 |
| **CE-5** | Tetrabutyl ammonium chloride | 0.500 | 2 | 1 |
| **Ex-6** | Tetrabutyl ammonium fluoride (trihydrate) | 0.500 | 2 | 3 |

As shown in Table 3, polymer release in the demolding process is facilitated by the use of fluoride anion as the active IMR.

### Part III: Additional IMR Agents

To investigate the effect of other commercially available internal mold release agents ("IMRs"), ammonium fluoride was the only fluoride salt used in Part III. Part III used Formulation B in place of Formulation A. Thus, the first four components of Formulation B were combined according to the weight ratio designated in Table 1 above. These components were mixed similarly as those of Formulation A in Part II, with the exception that cyclohexanedimethanol was melted at around 60-65°C prior to use. The casting and demolding processes of Formulation B, ammonium fluoride, and co-IMRs (as indicated in Table 4) were carried out using similar procedures as outlined in Part II above. The following Table 4 summarizes the comparison of polymer demoldability using different IMRs.

**Table 4: Comparison of Different Commercially Available IMRs in Conjunction with Ammonium Fluoride**

| **Examples** | **IMRs (at 1 part per weight)** | **Ammonium Fluoride (parts by weight)** | **Demoldability Evaluation** |
|---|---|---|---|
| **Ex-7A** | No IMR | 0.100 | 3 |
| **Ex-7B** | No IMR | 0.070 | 3 |
| **Ex-7C** | No IMR | 0.055 | 1 |
| **Ex-8A** | ZELEC^{®} UN | 0.025 | 3 |
| **Ex-8B** | ZELEC^{®} UN | 0.010 | 3 |
| **Ex-8C** | ZELEC^{®} UN | 0.005 | 2 |
| **Ex-9A** | MOLDWIZ^{®} 1681¹ | 0.025 | 3 |
| **Ex-9B** | MOLDWIZ^{®} 1681 | 0.010 | 3 |
| **Ex-9C** | MOLDWIZ^{®} 1681 | 0.005 | 2 |
| **Ex-10A** | MOLDWIZ^{®} 1685² | 0.025 | 3 |
| **Ex-10B** | MOLDWIZ^{®} 1685 | 0.010 | 3 |
| **Ex-10C** | MOLDWIZ^{®} 1685 | 0.005 | 1 |
| **Ex-11A** | MOLDWIZ^{®} 1582³ | 0.025 | 3 |
| **Ex-11B** | MOLDWIZ^{®} 1582 | 0.010 | 3 |
| **Ex-11C** | MOLDWIZ^{®} 1582 | 0.005 | 1 |

| | | | |
|---|---|---|---|
| ¹an internal mold release agent available from Axel Plastics Research Laboratories, Inc. ² an internal mold release agent available from Axel Plastics Research Laboratories, Inc. ³ an internal mold release agent available from Axel Plastics Research Laboratories, Inc. | | | |

As shown in Table 4, ammonium fluoride alone without the inclusion of an IMR was sufficient to release the polymer from the glass molds. The addition of some IMRs further improved polymer demoldability, allowing for lower fluoride content.

### Part IV: Comparison of Different Fluoride Sources

In addition to ammonium fluoride in Part III, a variety of fluoride sources were investigated in Part IV. Similar to Part II, Formulation A and ZELEC@ UN (1 part by weight as co-IMR) were used in all cases with and without additional fluoride sources. The mixing, casting, and demolding processes of Formulation A and ZELEC@ UN with and without fluoride salts follow similar procedures as in Part II. Table 5 shows the comparison among different fluoride sources, as well as the lowest levels of fluoride salt at which complete demoldability was achieved.

**Table 5: Effects of Fluoride Source and Concentration on Polymer Demoldability**

| **Examples** | **Fluoride Sources** | **Fluoride Salt (parts by weight)** | **Demoldability Evaluation** |
|---|---|---|---|
| **CE-12** | No Fluoride | - | 1 |
| **Ex-13A** | Ammonium Fluoride | 0.1000 | 3 |
| **Ex-13B** | Ammonium Fluoride | 0.0500 | 3 |
| **Ex-13C** | Ammonium Fluoride | 0.0250 | 3 |
| **Ex-13D** | Ammonium Fluoride | 0.0175 | 1 |
| **Ex-14A** | Potassium Fluoride | 0.1000 | 3 |
| **Ex-14B** | Potassium Fluoride | 0.0500 | 3 |
| **Ex-14C** | Potassium Fluoride | 0.0250 | 1 |
| **Ex-15A** | Cesium Fluoride | 0.1000 | 3 |
| **Ex-15B** | Cesium Fluoride | 0.0500 | 3 |
| **Ex-15C** | Cesium Fluoride | 0.0250 | 1 |
| **Ex-16A** | Tin (II) Fluoride | 0.1000 | 3 |
| **Ex-16B** | Tin (II) Fluoride | 0.0500 | 2 |
| **Ex-16C** | Tin (II) Fluoride | 0.0250 | 1 |
| **Ex-17A** | Sodium Tetrafluoroborate | 0.2500 | 3 |
| **Ex-17B** | Sodium Tetrafluoroborate | 0.1000 | 1 |
| **Ex-18A** | Tetrabutyl Ammonium Fluoride (trihydrate) | 1.0000 | 3 |
| **Ex-18B** | Tetrabutyl Ammonium Fluoride (trihydrate) | 0.5000 | 3 |
| **Ex-18C** | Tetrabutyl Ammonium Fluoride (trihydrate) | 0.2500 | 3 |
| **Ex-18D** | Tetrabutyl Ammonium Fluoride (trihydrate) | 0.1000 | 1 |

As shown in Table 5, the comparison between Comparative Example 12 and Examples 13 to 18 indicates that the addition of fluoride to the polymer formulation greatly increased the demoldability of the final polymer.

## Claims

1. An organic polymerizable composition for producing a molded polymeric article, the composition comprising a mold release agent comprised of ionic fluoride and/or ionic fluoride precursor present in an amount sufficient to effect at least partial demolding of the polymeric article from a mold,
wherein the ionic fluoride is present in an amount ranging from 20 to 5000 ppm;
wherein the mold release agent is selected from the group consisting of ammonium fluoride, potassium fluoride, cesium fluoride, tin (II) fluoride, sodium tetrafluoroborate, tetrabutyl ammonium fluoride (trihydrate), and mixtures thereof; and
wherein the composition further comprises a mold release agent which does not comprise ionic fluoride.

2. The organic polymerizable composition of claim 1, wherein the mold release agent which does not comprise ionic fluoride is selected from mono-alkyl phosphates, dialkyl phosphates, organic fatty acids, esters, amines, and mixtures thereof.

3. The organic polymerizable composition of claim 1, wherein the ionic fluoride is present in an amount ranging from 50 to 500 ppm.

4. The organic polymerizable composition of claim 1, wherein the composition further comprises a polymeric organic material selected from thermosetting polymeric organic materials and thermoplastic polymeric organic materials.

5. The organic polymerizable composition of claim 1, wherein the composition comprises a polymeric organic material selected from the group consisting of poly(C₁-C₁₂ alkyl methacrylates), poly(oxyalkylene dimethacrylates), poly(alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), thermoplastic polycarbonates, polyesters, polyurethanes, polythiourethanes, polysulfithiourethanes, poly(urea-urethane), polyethylene terephthalate), polystyrene, poly(alpha methylstyrene), copoly(styrene-methylmethacrylate), copoly(styrene-acrylonitrile), polyvinyl butyral or polymers prepared from bis(allyl carbonate) monomers, polyfunctional acrylate monomers, polyfunctional methacrylate monomers, diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol bis methacrylate monomers, alkoxylated polyhydric alcohol polyacrylate monomers, styrene monomers, urethane acrylate monomers, glycidyl acrylate monomers, glycidyl methacrylate monomers, diallylidene pentaerythritol monomers, and mixtures thereof.

6. The organic polymerizable composition of claim 1, wherein the composition comprises a polymeric organic material selected from the group consisting of polyurethanes, polythiourethanes, and poly(urea-urethane).

7. The organic polymerizable composition of claim 1, wherein, in addition to the mold release agent comprising ionic fluoride, the polymerizable composition comprises:
(a) a polyisocyanate component comprising one or more polyisocyanates; and
(b) a component that is reactive with the polyisocyanate component (a) comprising:
(i) optionally, at least one polyol having a number average molecular weight greater than 500;
(ii) an active hydrogen-containing component comprising (1) at least one polyol and/or polythiol, and (2) at least one compound containing both amine and hydroxyl functional groups, wherein the compound (2) has a number average molecular weight less than 500; and
(iii) optionally, a urethanization catalyst.

8. The organic polymerizable composition of claim 1, wherein, in addition to the mold release agent comprising ionic fluoride, the polymerizable composition comprises:
(a) a polyisocyanate component comprising one or more polyisocyanates; and
(b) a component that is reactive with the polyisocyanate component (a), the component (b) comprising:
(i) optionally, at least one polyol having a number average molecular weight greater than 500;
(ii) an active hydrogen-containing component comprising (1) at least one polyol and/or polythiol and, optionally, (2) at least one compound containing both amine and hydroxyl functional groups, wherein the compound (2) has a number average molecular weight less than 500;
(iii) a urea-containing diol which is the reaction product of a reaction mixture substantially free of urethanation catalyst, the reaction mixture comprising a diisocyanate and at least one aliphatic compound containing both amine and hydroxyl functional groups, wherein the equivalent ratio of amine functional groups to isocyanate functional groups is at least 1; and
(iv) optionally, a urethanization catalyst.

9. A molded polymeric article prepared from the composition of any of claims 1, 7 and 8.

10. The organic polymerizable composition of claim 1, wherein the mold is a glass mold.

## Patentansprüche

1. Eine organische polymerisierbare Zusammensetzung zur Herstellung eines geformten polymeren Gegenstands, wobei die Zusammensetzung ein Formtrennmittel enthält, das ionisches Fluorid und/oder einen ionischen Fluoridvorläufer enthält, der in einer Menge vorhanden ist, die ausreicht, zumindest eine teilweise Entformung des polymeren Gegenstands aus einer Form zu bewirken, wobei das ionische Fluorid in einer Menge von 20 bis 5000 ppm vorhanden ist;
wobei das Formtrennmittel ausgewählt ist aus der Gruppe bestehend aus Ammoniumfluorid, Kaliumfluorid, Cäsiumfluorid, Zinn(II)fluorid, Natriumtetrafluoroborat, Tetrabutylammoniumflourid (Trihydrat) und Mischungen davon; und
wobei die Zusammensetzung des Weiteren ein Formtrennmittel enthält, das kein ionisches Fluorid enthält.

2. Die organische polymerisierbare Zusammensetzung gemäß Anspruch 1, wobei das Formentrennmittel, das kein ionisches Fluorid enthält, ausgewählt ist aus Monoalkylphosphaten, Dialkylphosphaten, organischen Fettsäuren, Estern, Aminen und Mischungen davon.

3. Die organische polymerisierbare Zusammensetzung gemäß Anspruch 1, wobei das ionische Fluorid in einer Menge im Bereich von 50 bis 500 ppm vorhanden ist.

4. Die organische polymerisierbare Zusammensetzung gemäß Anspruch 1, wobei die Zusammensetzung des Weiteren ein polymeres organisches Material, ausgewählt aus duroplastischen polymeren organischen Materialien und thermoplastischen polymeren organischen Materialien, enthält.

5. Die organische polymerisierbare Zusammensetzung gemäß Anspruch 1, wobei die Zusammensetzung ein polymeres organisches Material, ausgewählt aus der Gruppe bestehend aus Poly(C₁-C₁₂-alkylmethacrylaten), Poly(oxyalkylendimethacrylaten), Poly(alkoxylierten Phenolmethacrylaten), Celluloseacetat, Cellulosetriacetat, Celluloseacetatpropionat, Celluloseacetatbutyrat, Poly(vinylacetat), Poly(vinylalkohol), Poly(vinylchlorid), Poly(vinylidenchlorid), thermoplastischen Polycarbonaten, Polyestern, Polyurethanen, Polythiourethanen, Polysulfithiourethanen, Poly(harnstoff-urethan), Poly(ethylenterephthalat), Polystyrol, Poly(α-methylstyrol), Copoly(styrol-methylmethacrylat), Copoly(styrol-acrylonitril, Polyvinylbutyral oder Polymeren, hergestellt aus Bis(allylcarbonat)monomeren, polyfunktionellen Acrylatmonomeren, polyfunktionellen Methacrylatmonomeren, Diethylenglykoldimethacrylatmonomeren, Diisopropenylbenzylmonomeren, ethoxylierten Bisphenol-A-dimethacrylatmonomeren, Ethylenglykolbismethacrylatmonomeren, Poly(ethylenglykol)bismethacrylatmonomeren, ethoxylierten Phenolbismethacrylatmonomeren, alkoxylierten mehrwertigen Alkoholpolyacrylatmonomeren, Styrolmonomeren, Urethanacrylatmonomeren, Glycidylacrylatmonomeren, Glycidylmethacrylatmonomeren, Diallylidenpentaerythritolmonomeren und Mischungen davon, enthält.

6. Die organische polymerisierbare Zusammensetzung gemäß Anspruch 1, wobei die Zusammensetzung ein polymeres organisches Material, ausgewählt aus der Gruppe bestehend aus Polyurethanen, Polythiourethanen und Poly(harnstoffurethan), enthält.

7. Die organische polymerisierbare Zusammensetzung gemäß Anspruch 1, wobei, zusätzlich zu dem ionisches Fluorid enthaltenden Formtrennmittel, die polymerisierbare Zusammensetzung enthält:
(a) eine Polyisocyanatkomponente, enthaltend ein oder mehrere Polyisocyanate; und
(b) eine Komponente, die reaktiv mit der Polyisocyanatkomponente (a) ist, enthaltend:
(i) optional mindestens ein Polyol mit einem zahlenmittleren Molekulargewicht von mehr als 500;
(ii) eine aktiven Wasserstoff enthaltende Komponente enthaltend (1) mindestens ein Polyol und/oder Polythiol und (2) mindestens eine Verbindung enthaltend sowohl amin- als auch hydroxyfunktionelle Gruppen, wobei die Verbindung (2) ein zahlenmittleres Molekulargewicht von weniger als 500 aufweist; und
(iii) optional ein Urethanisierungskatalysator.

8. Die organische polymerisierbare Zusammensetzung gemäß Anspruch 1, wobei, zusätzlich zu dem ionischen Fluorid enthaltenden Formtrennmittel, die polymerisierbare Zusammensetzung enthält:
(a) eine Polyisocyanatkomponente, enthaltend ein oder mehrere Polyisocyanate; und
(b) eine Komponente, die reaktiv mit der Polyisocyanatkomponente (a) ist, die Komponente (b) enthaltend:
(i) optional mindestens ein Polyol mit einem zahlenmittleren Molekulargewicht von mehr als 500;
(ii) eine aktiven Wasserstoff enthaltende Komponente enthaltend (1) mindestens ein Polyol und/oder Polythiol und optional (2) mindestens eine Verbindung enthaltend sowohl amin- als auch hydroxyfunktionelle Gruppen, wobei die Verbindung (2) ein zahlenmittleres Molekulargewicht von weniger als 500 aufweist;
(iii) ein Harnstoff enthaltendes Diol, welches das Reaktionsprodukt einer Reaktionsmischung, die im Wesentlichen frei von einem Urethanisierungskatalysator ist, ist, wobei die Reaktionsmischung ein Diisocyanat und mindestens eine aliphatische Verbindung, die sowohl amin- als auch hydroxyfunktionelle Gruppen enthält, enthält, wobei das Äquivalenzverhältnis von aminfunktionellen Gruppen zu isocyanatfunktionellen Gruppen mindestens 1 ist; und
(iv) optional einen Urethanisierungskatalysator.

9. Ein geformter polymerer Gegenstand, hergestellt aus der Zusammensetzung gemäß irgendeinem der Ansprüche 1, 7 und 8.

10. Die organische polymerisierbare Zusammensetzung gemäß Anspruch 1, wobei die Form eine Glasform ist.

## Revendications

1. Composition organique polymérisable pour production d'un article moulé en polymère, laquelle composition comprend un agent de démoulage constitué d'un fluorure ionique et/ou d'un précurseur de fluorure ionique, présent en une quantité suffisante pour qu'on puisse effectuer un démoulage au moins partiel d'un article en polymère en retirant celui-ci d'un moule,
dans laquelle composition le fluorure ionique se trouve présent en une proportion valant de 20 à 5000 ppm,
dans laquelle l'agent de démoulage est choisi dans l'ensemble formé par les fluorure d'ammonium, fluorure de potassium, fluorure de césium, fluorure d'étain-11, tétrafluoroborate de sodium, fluorure de tétrabutyl-ammonium (trihydrate), et leurs mélanges,
et laquelle composition comprend en outre un agent de démoulage qui ne contient pas de fluorure ionique.

2. Composition organique polymérisable conforme à la revendication 1, dans laquelle l'agent de démoulage qui ne contient pas de fluorure ionique est choisi parmi les phosphates de monoalkyle, les phosphates de dialkyle, les acides gras organiques, les esters, les amines, et les mélanges de tels composés.

3. Composition organique polymérisable conforme à la revendication 1, dans laquelle le fluorure ionique se trouve présent en une proportion valant de 50 à 500 ppm.

4. Composition organique polymérisable conforme à la revendication 1, laquelle composition comprend en outre un matériau polymère organique choisi parmi les matériaux polymères organiques thermodurcissables et les matériaux polymères organiques thermoplastiques

5. Composition organique polymérisable conforme à la revendication 1, laquelle composition comprend un matériau polymère organique choisi dans l'ensemble constitué par les suivants : poly-(méthacrylate d'alkyle en C₁-C₁₂), poly(diméthacrylate d'oxyalkylène), poly(méthacrylate de phénol alcoxylé), acétate de cellulose, triacétate de cellulose, acétopropionate de cellulose, acétobutyrate de cellulose, poly(acétate de vinyle), poly(alcool vinylique), poly(chlorure de vinyle), poly(chlorure de vinylidène), polycarbonates thermoplastiques, polyesters, polyuréthanes, polythiouréthanes, polysulfithiouréthanes, poly(urée-uréthane), poly(téréphtalate d'éthylène), polystyrène, poly-(alpha-méthyl-styrène), copoly(styrène/méthacrylate de méthyle), co-poly(styrène/acrylonitrile), poly(butyral de vinyle), et polymères préparés à partir de monomères de type bis(carbonate d'allyle), de monomères acrylates polyfonctionnels, de monomères méthacrylates polyfonctionnels, de monomères de type diméthacrylate de diéthylèneglycol, de monomères de type disopropényl-benzène, de monomères de type bis-méthacrylate de bisphénol A éthoxylé, de monomères de type bis-méthacrylate d'éthylèneglycol, de monomères de type bis-méthacrylate de polyéthylèneglycol, de monomères de type bis-méthacrylate de phénol éthoxylé, de monomères de type polyacrylate de polyol alcoxylé, de monomères de type styrène, de monomères de type uréthane-acrylate, de monomères de type acrylate de glycidyle, de monomères de type méthacrylate de glycidyle, de monomères de type diallylidène-penta-érythritol, et de mélanges de tels monomères.

6. Composition organique polymérisable conforme à la revendication 1, laquelle composition comprend un matériau polymère organique choisi dans l'ensemble constitué par les polyuréthanes, les polythiouréthanes et les poly(urée-uréthane).

7. Composition organique polymérisable conforme à la revendication 1, laquelle composition polymérisable, en plus de l'agent de démoulage comprenant un fluorure ionique, comprend :
a) un composant polyisocyanate comprenant un ou plusieurs polyisocyanate(s),
b) et un composant réactif vis-à-vis du composant polyisocyanate (a), qui comprend :
i) en option, au moins un polyol présentant une masse molaire moyenne en nombre supérieure à 500,
ii) un composant à hydrogène actif, comprenant
1) au moins un polyol et /ou polythiol,
2) et au moins un composé comprenant à la fois des groupes fonctionnels amino et hydroxy, lequel composé (2) présente une masse molaire moyenne en nombre inférieure à 500,
iii) et en option, un catalyseur de formation d'uréthane.

8. Composition organique polymérisable conforme à la revendication 1, laquelle composition polymérisable, en plus de l'agent de démoulage comprenant un fluorure ionique, comprend :
a) un composant polyisocyanate comprenant un ou plusieurs polyisocyanate(s),
b) et un composant réactif vis-à-vis du composant polyisocyanate (a), lequel composant (b) comprend :
i) en option, au moins un polyol présentant une masse molaire moyenne en nombre supérieure à 500,
ii) un composant à hydrogène actif, comprenant
1) au moins un polyol et /ou polythiol,
2) et en option, au moins un composé comprenant à la fois des groupes fonctionnels amino et hydroxy, lequel composé (2) présente une masse molaire moyenne en nombre inférieure à 500,
iii) un diol contenant un groupe de type urée, qui est le produit de réaction d'un mélange réactionnel ne contenant pratiquement pas de catalyseur de formation d'uréthane, lequel mélange réactionnel comprend un diisocyanate et au moins un composé aliphatique comprenant à la fois des groupes fonctionnels amino et hydroxy, étant entendu que le rapport d'équivalents des groupes fonctionnels amino aux groupes fonctionnels isocyanate vaut au moins 1,
iv) et en option, un catalyseur de formation d'uréthane.

9. Article moulé en polymère, préparé à partir d'une composition conforme à l'une des revendications 1, 7 et 8.

10. Composition organique polymérisable conforme à la revendication 1, pour laquelle le moule est un moule en verre.
